# EUROPEAN PATENT APPLICATION

(11) **EP 1 792 547 A1**
(43) Date of publication of application: **06.06.2007**
(21) Application number: 06123578.4
(22) Date of filing: 07.11.2006
(51) Int. Cl.: A44B 11/25, B60R 22/10, B60R 22/48

(54) **Seat belt attachment**

(30) Priority: 30.11.2005 GB 0524390
(71) Applicant: Nissan Motor Manufacturing (UK) Ltd., Cranfield, Bedfordshire MK43 0DB (GB)
(72) Inventor: DAVIES, John, Nissan Motor Manufacturing (UK) Ltd., Cranfield, Bedfordshire MK43 0DB (GB); WHEELER, George, Nissan Motor Manufacturing (UK) L, Cranfield, Bedfordshire MK43 0DB (GB)
(74) Representative: Hufton, Victoria Alice

(57) **Abstract**

A device for attachment to the diagonal strap of a vehicle seat belt for obscuring the release button of said seat belt from a user is provided. The device comprises an elongate body portion and an extension portion. The elongate body portion comprises first and second portions detachably engageable with one another thereby to form a slot therebetween. The slot is shaped for slidably receiving said diagonal strap of said belt. The extension portion extends laterally of said body portion an amount sufficient to obscure said release button of said seat belt from said user when said device is attached to said strap adjacent said release button.

## Description

The present invention relates to a device for attachment to the diagonal strap of a vehicle seat belt, for obscuring the release button of the seat belt from a user.

Child seats in vehicles are generally secured in position using the vehicle seat belt. However, since small children are inherently curious, a child will naturally be attracted to the red release button on the seat belt buckle. Unfortunately, since the release buttons are intended to be easy to actuate, it can be quite easy for the child to depress the button sufficiently to release the seat belt. Should the parent not notice and the vehicle be involved in even a minor accident, the consequences for the child could be severe.

Because the release button must be readily accessible in an emergency, the current legal requirements do not allow the release button to be covered to prevent access by a child.

Accordingly, the present invention provides device for attachment to the diagonal strap of a vehicle seat belt for obscuring the release button of said seat belt from a user, the device comprising: an elongate body portion having a slot formed in said body portion shaped for slidably receiving said diagonal strap of said belt; and an extension portion extending laterally of said body portion an amount sufficient to obscure said release button of said seat belt from said user when said device is attached to said strap adjacent said release button.

In a preferred form of the invention said slot opens into a sidewall of said body portion to enable said strap to be engaged into said slot. Advantageously, said slot is generally T-shaped in cross-section with the vertical arm of the T opening out of said body portion opposite said extension portion to enable said strap to be engaged into the cross arm of the T through said vertical arm.

Preferably, said body portion comprises first and second portions detachably engageable with one another thereby to form said slot therebetween. Said first and second portions may be hinged to one another and pivotable between a first position enabling location of said seat strap in said slot and a second, in use position retaining said strap in said slot.

Advantageously, said extension portion extends from said body portion in a generally arcuate or semi-circular shape.

Preferably, said device is formed of a resilient material.

Said slot is conveniently dimensioned so as to prevent said device sliding beyond an upper end of the seat belt tongue and thereby covering said release button.

In a further preferred embodiment the body portion comprises a plurality of axially separable sections.

The present invention is further described hereinafter, by way of example, with reference to the accompanying drawings, in which:
Figure 1 is a perspective view of a child seat secured in position using a vehicle seat belt;
Figure 2 is a perspective view of a preferred form of device according to the present invention;
Figure 3 is a perspective view from above of the device of Figure 2;
Figure 4 is a side elevation of the device of Figures 2 and 3; and
Figure 5 is a view in the direction arrow A of Figure 4.

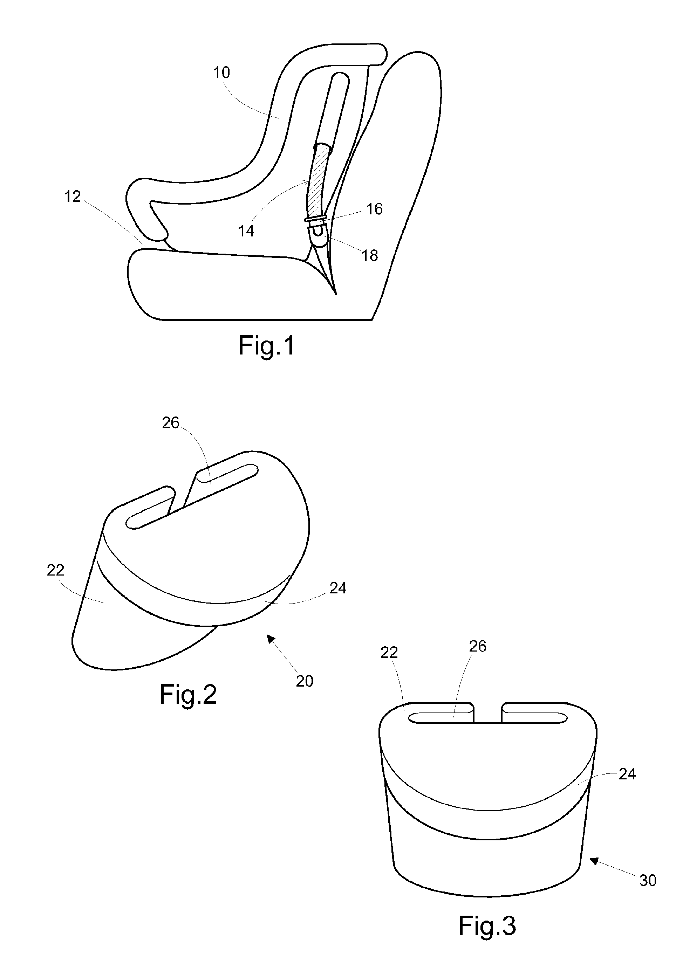

Referring now to the drawings, Figure 1 shows a child seat 10 secured in position on a rear seat 12 of a vehicle, using a vehicle seat belt 14, which is shown with the seat belt tongue 16 engaged in the seat belt buckle 18.

In such arrangements, the release button of the seat belt buckle 18 is normally visible to a child in the child seat 10 and the attraction of playing with the red release button often proves too great a temptation.

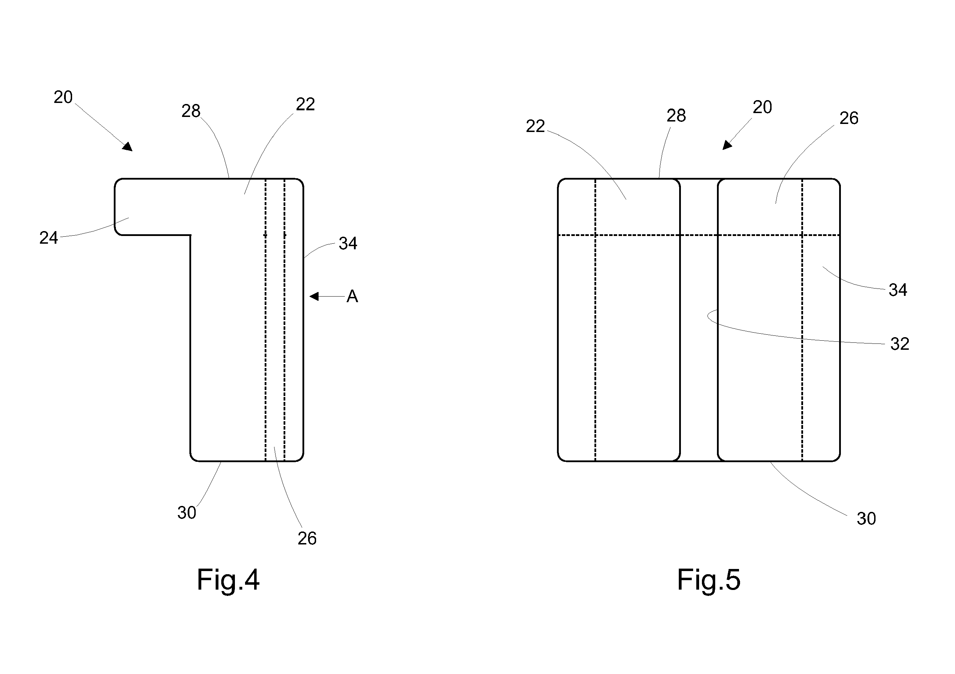

Figures 2 to 5 show a preferred device 20 according to the present invention, which obscures the release button from the child. The device 20 has a generally elongate body portion 22 and a laterally extending extension portion 24 which here is shown extending from an upper part of the body portion 22. The terms upper and lower are used here to refer to the orientation of the device in use. As best seen in Figure 4, the two portions 22, 24 generally form the shape of an inverted L, with the extension portion 24 extending laterally from the body portion 22 to form the extended, generally horizontal arm of the inverted L.

The body portion 22 is formed with an axially extending slot or slot 26, which opens into upper and lower surfaces 28, 30 of the device. The slot has an opening 32 which extends the length of the slot to allow access of the strap. The opening conveniently lies on the side of the body portion opposite the extension portion 24. Alternatively, the slot can open into the side of the body portion.

The slot 26 is shaped so that it can slidably receive the strap of the seat belt. In use, the strap is inserted into the slot 26 by way of the lateral opening 32 with the lower end 30 of the device facing the seat belt tongue.

The lower end of the slot 26 is dimensioned such that it cannot ride over the seat belt tongue, but rests above it on the strap. This is to prevent the device being forced downwardly to cover the seat belt buckle release button.

In use, the device is engaged on the seat belt strap as indicated above, and is slid down until the device abuts the seat belt tongue. In this position, the extension portion 24 extends outwardly of the device and overlies the seat belt buckle, thus obscuring the release button from the view of a child in the seat. However, the release button is not obscured from general view and is easily accessible by an adult who wished to release the child from the child seat.

In a modified form of the invention, not shown in the drawings, the device can be formed by a number of individual sections which vertically align on the seat belt strap and can either be secured to one another by suitable means or simply abut one another. Thus, any number of sections can be used to adjust the height of the device and therefore the relative positions of the extension portion 24 and the seat belt release button.

In a further embodiment, the body portion 22 can in fact be formed by two further portions which engage one another to form the slot 26 therebetween. The two portions may be hinged to close about the strap and can be secured together by any suitable means, such as in a snap-fit manner to form the slot and retain the seat belt strap in the slot.

The device may be made of a resilient material such as EPDM or Neoprene and may be attached to the child seat, or to the release buckle of the vehicle seat belt arrangement, via a flexible and/or elasticated strap or tie.

## Claims

1. A device for attachment to the diagonal strap of a vehicle seat belt for obscuring the release button of said seat belt from a user, the device comprising:
an elongate body portion (22) comprising first and second portions detachably engageable with one another thereby to form a slot (26) therebetween, wherein the slot (26) is shaped for slidably receiving said diagonal strap of said belt;
and an extension portion (24) extending laterally of said body portion (22) an amount sufficient to obscure said release button of said seat belt from said user when said device is attached to said strap adjacent said release button.

2. A device as claimed in claim 1, wherein said slot (26) opens into a sidewall (34) of said body portion to enable said strap to be engaged into said slot.

3. A device as claimed in claim 2, wherein said slot (26) is generally T-shaped in cross-section with the vertical arm of the T opening out of said body portion (22) opposite said extension portion (24) to enable said strap to be engaged into the cross arm of the T through said vertical arm.

4. A device as claimed in claim 1 or 2, wherein said first and second portions are hinged to one another and pivotable between a first position enabling location of said seat strap in said slot and a second, in use position retaining said strap in said slot.

5. A device as claimed in any preceding claim, wherein said extension portion (24) extends from said body portion (22) in a generally arcuate or semi-circular shape.

6. A device as claimed in any preceding claim, wherein said device is formed of a resilient material.

7. A device as claimed in any preceding claim, wherein said slot (26) is dimensioned so as to prevent said device sliding beyond an upper end of the seat belt tongue and thereby covering said release button.

8. A device as claimed in any preceding claim, wherein said body portion (22) comprises a plurality of axially separable sections.
